# EUROPÄISCHE PATENTSCHRIFT

(11) **EP 1 926 894 B1**
(45) Veröffentlichungstag und Bekanntmachung des Hinweises auf die Patenterteilung: **31.12.2008**
(21) Anmeldenummer: 06778080.9
(22) Anmeldetag: 31.07.2006
(51) Int. Cl.: F01N 9/00, F01N 3/20

(54) **VERFAHREN ZUM BETREIBEN EINER BRENNKRAFTMASCHINE UND VORRICHTUNG ZUR DURCHFÜHRUNG DES VERFAHRENS**
METHOD FOR OPERATING AN INTERNAL COMBUSTION ENGINE AND DEVICE FOR CARRYING OUT THE METHOD
PROCEDE DE FONCTIONNEMENT D'UN MOTEUR A COMBUSTION INTERNE ET DISPOSITIF POUR METTRE EN OEUVRE LEDIT PROCEDE

(30) Priorität: 07.09.2005 DE 102005042489
(43) Veröffentlichungstag der Anmeldung: 04.06.2008
(73) Patentinhaber: ROBERT BOSCH GMBH, 70442 Stuttgart (DE)
(72) Erfinder: WALZ, Christian, 76448 Durmersheim (DE); LOEHR, Matthias, 71711 Steinheim/Hoepfigheim (DE); RUDOLPH, Andreas, 89297 Roggenburg (DE)
(86) Internationale Anmeldenummer: PCT/EP2006/064854
(87) Internationale Veröffentlichungsnummer: WO 2007/028677

(56) Entgegenhaltungen:
- EP-A- 1 434 049
- DE-A1- 3 721 572
- DE-A1-0102004 046 64
- US-A- 4 302 205
- US-A- 4 473 536

## Beschreibung

### Stand der Technik

Die Erfindung geht aus von einem Verfahren zum Betreiben einer Brennkraftmaschine, in deren Abgasbereich ein SCR-Katalysator und stromabwärts nach dem SCR-Katalysator ein NOx-Sensor, der eine Querempfindlichkeit gegenüber einem Reagenzmittel aufweist, das im SCR-Katalysator zur NOx-Konvertierung beiträgt, angeordnet sind, und von einer Vorrichtung zur Durchführung des Verfahrens nach der Gattung der unabhängigen Ansprüche.

In der DE 199 03 439 A1 werden ein Verfahren und eine Vorrichtung zum Betreiben einer Brennkraftmaschine beschrieben, in deren Abgasbereich ein SCR-Katalysator (Selective-Catalytic-Reduktion) angeordnet ist, der die im Abgas der Brennkraftmaschine enthaltenen Stickoxide mit einem Reagenzmittel zu Stickstoff reduziert. Die Dosierung des Reagenzmittels erfolgt vorzugsweise in Abhängigkeit von Betriebskenngrößen der Brennkraftmaschine, wie beispielsweise der Drehzahl und der eingespritzten Kraftstoffmenge. Weiterhin erfolgt die Dosierung vorzugsweise in Abhängigkeit von Abgas-Kenngrößen, wie beispielsweise der Abgastemperatur oder der Betriebstemperatur des SCR-Katalysators.

Als Reagenzmittel ist beispielsweise das Reduktionsmittel Ammoniak vorgesehen, das aus einer Harnstoff-Wasser-Lösung gewonnen werden kann. Die Dosierung des Reagenzmittels oder von Ausgangsstoffen des Reagenzmittels muss sorgfältig festgelegt werden. Eine zu geringe Dosierung hat zur Folge, dass Stickoxide im SCR-Katalysator nicht mehr vollständig reduziert werden können. Eine zu hohe Dosierung führt zu einem Reagenzmittelschlupf, der einerseits zu einem unnötig hohen Reagenzmittelverbrauch und andererseits, in Abhängigkeit von der Beschaffenheit des Reagenzmittels, zu einer unangenehmen Geruchsbelästigung führen kann.

In der DE 199 60 731 A1 und DE 199 62 912 A1 sind jeweils NOx-Sensoren beschrieben, die zum Erfassen der in einem Abgasstrom vorliegenden NOx-Konzentration vorgesehen sind. Die NOx-Sensoren enthalten mehrere Kammern, die über die Diffusionsbarrieren miteinander in Verbindung stehen. Die bekannten Mehrkammer-NOx-Sensoren weisen aufgrund des Messprinzips eine Querempfindlichkeit gegenüber Ammoniak (NH3) auf. Das im Abgas enthaltene Ammoniak als Beispiel eines Reagenzmittels führt über die Reaktionen 4 NH3 + 5 O2 → 4 NO + 6 H2O zu einer Verfälschung des Sensorsignals. Wenn bei den vorbekannten Vorgehensweisen demnach eine Erhöhung der Reagenzmittel-Dosierung erfolgt, wird bei einer vorliegenden Überdosierung oder richtigen Dosierung des Reagenzmittels das Sensorsignal aufgrund des auftretenden Reagenzmittelschlupfes ansteigen und bei einer vorliegenden Unterdosierung aufgrund der zunehmenden NOx-Konvertierung abfallen. Wenn dagegen eine Absenkung der Reagenzmittel-Dosierung erfolgt, wird bei einer vorliegenden Überdosierung des Reagenzmittels das Sensorsignal aufgrund des verminderten Reagenzmittelschlupfes abfallen und bei einer richtigen Dosierung oder Unterdosierung aufgrund der nicht mehr vollständigen NOx-Konvertierung ansteigen.

In der DE 10 2004 046 640 A1 (nicht vorveröffentlicht) sind ein Verfahren zum Betreiben einer Brennkraftmaschine und eine Vorrichtung zur Durchführung des Verfahrens beschrieben, bei denen ein NOx-Sensor mit einer Querempfindlichkeit gegenüber einem Reagenzmittel stromabwärts nach dem SCR-Katalysator angeordnet ist. Im Abgasbereich ist wenigstens ein SCR-Katalysator angeordnet, der mit einem Reagenzmittel beaufschlagt wird, welches zur NOx-Konvertierung im SCR-Katalysator beiträgt. Vorgesehen ist die Berechnung zumindest eines Maßes für die stromabwärts nach dem SCR-Katalysator auftretende NOx-Konzentration, die eine Erhöhung der Genauigkeit bei der Festlegung der Dosierung des Reagenzmittels ermöglicht. Ein Reagenzmittelschlupf kann aus der Differenz zwischen dem berechneten Maß für die NOx-Konzentration und dem gemessenen Maß für die Summe der NOx-Konzentration und der Reagenzmittel-Konzentration ermittelt werden. Berücksichtigt wird die Tatsache, dass sowohl ein Reagenzmittelschlupf als auch eine unzureichende NOx-Reduktionsreaktionen eine Abweichung zwischen dem berechneten Maß für die NOx-Konzentration und dem gemessenen Maß für die Summe der NOx-Konzentration und der Reagenzmittel-Konzentration in dieselbe Richtung bewirken. Gemäß einer Ausgestaltung wird bei einer Differenz zunächst die Dosierung des Reagenzmittels vermindert. Wenn ein Reagenzmittelschlupf vorlag, wird die Verminderung der Dosierung des Reagenzmittels zu einer Verminderung des Reagenzmittelschlupfes führen. Die Verminderung der Dosierung des Reagenzmittels hat sich in diesem Fall als richtige Maßnahme herausgestellt. Lag ursprünglich eine zu geringe Dosierung des Reagenzmittels vor, so wird sich die ermittelte Differenz aufgrund der geringeren NOx-Konvertierung weiter erhöhen, sodass daraus geschlossen werden kann, dass die Verminderung der Dosierung des Reagenzmittels falsch war und stattdessen eine Erhöhung der Dosierung vorzunehmen ist.

In der DE 10 2004 031 624 A1 (nicht vorveröffentlicht) ist ein Verfahren zum Betreiben eines zur Reinigung des Abgases einer Brennkraftmaschine verwendeten SCR-Katalysators beschrieben, bei dem eine Steuerung oder Regelung des Reagenzmittel-Füllstands im SCR-Katalysator auf einen vorgegebenen Speichersollwert vorgesehen ist. Die gezielte Vorgabe des Speichersollwerts stellt einerseits sicher, dass in instationären Zuständen der Brennkraftmaschine eine ausreichende Reagenzmittelmenge zur möglichst vollständigen Beseitigung der NOx-Rohemissionen der Brennkraftmaschine zur Verfügung steht und dass andererseits ein Reagenzmittelschlupf vermieden wird.

Der Reagenzmittel-Füllstand des SCR-Katalysators wird anhand eines Katalysatormodells ermittelt, das den in den SCR-Katalysator einströmenden NOx-Massenstrom, den den SCR-Katalysator verlassenden NOx-Massenstrom, die Katalysatortemperatur sowie gegebenenfalls den Reagenzmittelschlupf berücksichtigt. Der maximal mögliche Reagenzmittel-Füllstand des SCR-Katalysators hängt insbesondere von der Betriebstemperatur des SCR-Katalysators ab, der bei geringen Betriebstemperaturen am höchsten ist und mit zunehmender Betriebstemperatur zu kleineren Werten abfällt. Der Wirkungsgrad des SCR-Katalysators hängt von der katalytischen Aktivität ab, die bei geringen Betriebstemperaturen gering ist, mit steigender Betriebstemperatur ein Maximum durchläuft und mit weiter zunehmender Betriebstemperatur wieder absinkt.

Der Erfindung liegt die Aufgabe zugrunde, ein Verfahren zum Betreiben einer Brennkraftmaschine, in deren Abgasbereich ein SCR-Katalysator und stromabwärts nach dem SCR-Katalysator ein NOx-Sensor, der eine Querempfindlichkeit gegenüber einem Reagenzmittel aufweist, das im SCR-Katalysator zur NOx-Konvertierung beiträgt, angeordnet sind, sowie eine Vorrichtung zur Durchführung des Verfahrens anzugeben, die ein möglichst optimales Abgas-Reinigungsergebnis bei einem minimalen Reagenzmittelschlupf ermöglichen.

Die Aufgabe wird durch die in den unabhängigen Ansprüchen angegebenen Merkmale jeweils gelöst.

### Vorteile der Erfindung

Das erfindungsgemäße Verfahren zum Betreiben einer Brennkraftmaschine geht davon aus, dass im Abgasbereich der Brennkraftmaschine wenigstens ein SCR-Katalysator angeordnet ist, der mit einem Reagenzmittel beaufschlagt wird, welches zur NOx-Konvertierung im SCR-Katalysator beiträgt. Stromabwärts nach dem SCR-Katalysator ist ein NOx-Sensor angeordnet, der ein Sensorsignal bereitstellt, das zumindest ein Maß für den NOx-Strom im Abgas stromabwärts nach dem SCR-Katalysator und, aufgrund einer Querempfindlichkeit gegenüber dem Reagenzmittel, ein Maß für den Reagenzmittelschlupf widerspiegelt. Berechnet wird weiterhin wenigstens ein Maß für den stromabwärts nach dem SCR-Katalysator auftretenden NOx-Strom. Ermittelt wird die Differenz zwischen dem berechneten Maß für den NOx-Strom und dem gemessenen NOx-Strom. Ein Reagenzmittelsignal, welches die Dosierung des Reagenzmittels festlegt, wird in Abhängigkeit von der ermittelten Differenz beeinflusst. Vorgesehen ist eine Plausibilisierung, bei welcher die in einer vorgegebenen Zeitdauer dosierte Reagenzmittelmenge und die im SCR-Katalysator umgesetzte Reagenzmittelmenge und/oder die konvertierte NOx-Menge miteinander verglichen werden. Bei einer Abweichung wird ein Korrektursignal bereitgestellt, welches das Reagenzmittelsignal beeinflusst.

Aufgrund der Querempfindlichkeit des NOx-Sensors gegenüber dem Reagenzmittel kann bei einer festgestellten Differenz nicht ohne Weiteres entschieden werden, ob eine Überdosierung des Reagenzmittels vorliegt, die zu einem Reagenzmittelschlupf führt, oder ob eine Unterdosierung des Reagenzmittels vorliegt, die zu einem erhöhten NOx-Strom Anlass gibt. Die erfindungsgemäße Vorgehensweise ermöglicht mit der Plausibilisierung eine gegebenenfalls erforderliche Korrektur der Dosierung des Reagenzmittels in dem Fall, dass zunächst eine Korrektur in die falsche Richtung vorgenommen wurde. Eine Änderung der Dosierung des Reagenzmittels in die richtige Richtung wird durch die Plausibilisierung bestätigt, wobei in diesem Fall kein weiterer Eingriff erforderlich ist.

Ein wesentlicher Vorteil der erfindungsgemäßen Vorgehensweise ergibt sich durch einen verringerten Applikationsaufwand. Insbesondere wird mit der erfindungsgemäßen Vorgehensweise eine Dosierung des Reagenzmittels erreicht, die nur ein geringes Überschwingen und Unterschwingen aufweist. Erreicht wird dadurch eine optimale Dosierung des Reagenzmittels, sodass einerseits ein minimaler Reagenzmittelschlupf und andererseits eine hohe NOx-Konvertierung sichergestellt werden können.

Die erfindungsgemäße Vorgehensweise ist mit einfachen und daher preisgünstigen Mitteln dadurch realisierbar, dass lediglich ein stromabwärts nach dem SCR-Katalysator angeordneter NOx-Sensor erforderlich ist, der eine an sich unerwünschte Querempfindlichkeit gegenüber dem Reagenzmittel aufweist, die bei der erfindungsgemäßen Vorgehensweise gezielt ausgenutzt wird.

Vorteilhafte Weiterbildungen und Ausgestaltungen der erfindungsgemäßen Vorgehensweise ergeben sich aus abhängigen Ansprüchen.

Eine Ausgestaltung sieht vor, dass bei der Plausibilisierung weiterhin die Änderung des Reagenzmittel-Istfüllstands im SCR-Katalysator während des vorgegebenen Zeitraums berücksichtigt wird. Eine hohe Genauigkeit wird dadurch erreicht, dass bei der Ermittlung der Änderung des Reagenzmittel-Istfüllstands die Temperatur des SCR-Katalysators berücksichtigt wird. Die Berücksichtigung der Änderung des Reagenzmittel-Istfüllstands im SCR-Katalysator unterstützt die Plausibilisierung, weil die zumindest innerhalb des vorgegebenen Zeitraums in den SCR-Katalysator eingelagerte Reagenzmittelmenge oder die aus dem SCR-Katalysator entnommene Reagenzmittelmenge bei der Bilanzierung der umgesetzten Reagenzmittelmenge und/oder der konvertierten NOx-Menge und der dosierten Reagenzmittelmenge berücksichtigt werden kann.

Eine Ausgestaltung sieht vor, dass bei der Ermittlung des Korrektursignals eine Normierung auf die im vorgegebenen Zeitraum dosierte Reagenzmittelmenge vorgenommen wird. Mit dieser Maßnahme wird die Bilanzierung unabhängig von der dosierten Reagenzmittelmenge.

Eine Ausgestaltung sieht vor, dass das Reagenzmittelsignal in Abhängigkeit vom Reagenzmittel-Istfüllstand im SCR-Katalysator festgelegt wird. Eine Weiterbildung dieser Ausgestaltung sieht vor, dass das Reagenzmittelsignal indirekt über eine Manipulation des Reagenzmittel-Istfüllstands im SCR-Katalysator beeinflusst wird. Bevorzugt wird der Reagenzmittel-Istfüllstand im SCR-Katalysator auf einen vorgegebenen Reagenzmittel-Sollfüllstand geregelt.

Eine Ausgestaltung sieht vor, dass nach einer Beeinflussung des Reagenzmittelsignals durch das Korrektursignal eine weitere Plausibilisierung erst nach Ablauf einer vorgegebenen Wartezeit vorgenommen wird. Mit dieser Maßnahme wird sichergestellt, dass nach einer gegebenenfalls erforderlichen Korrektur wieder ein zumindest quasistationärer Betriebszustand erreicht wird, in welchem eine Plausibilisierung sinnvoll durchgeführt werden kann.

Die erfindungsgemäße Vorrichtung zum Betreiben einer Brennkraftmaschine betrifft zunächst ein Steuergerät, das zur Durchführung des Verfahrens hergerichtet ist. Das Steuergerät enthält insbesondere einen ersten Integrator zum Ermitteln der dosierten Reagenzmittelmenge und einen zweiten Integrator zum Ermitteln der im SCR-Katalysator umgesetzten Reagenzmittelmenge und/oder der konvertierten NOx-Menge sowie eine Korrektursignal-Ermittlung, welche das Korrektursignal bereitstellt.

Das Steuergerät enthält vorzugsweise wenigstens einen elektrischen Speicher, in dem die Verfahrensschritte als Computerprogramm abgelegt sind.

Weitere vorteilhafte Weiterbildungen und Ausgestaltungen der erfindungsgemäßen Vorgehensweise ergeben sich aus weiteren abhängigen Ansprüchen und aus der folgenden Beschreibung.

### Zeichnung

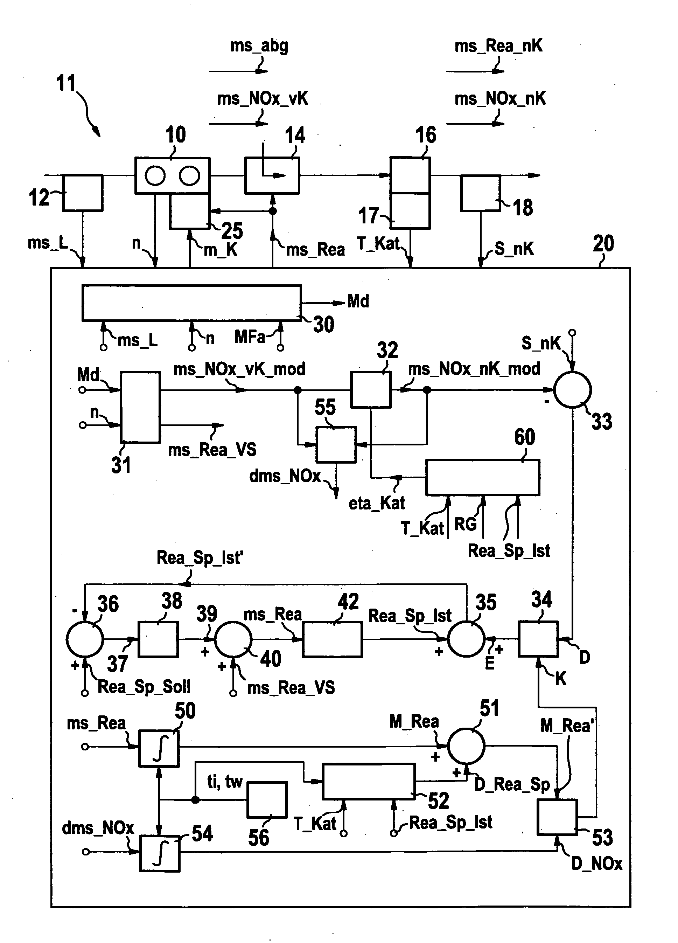

Die Figur zeigt ein technisches Umfeld, in welchem ein erfindungsgemäßes Verfahren abläuft.

Die Figur zeigt eine Brennkraftmaschine 10, in deren Ansaugbereich 11 eine Luftermittlung 12 und in deren Abgasbereich 13 eine Reagenzmittel-Dosierung 14, ein SCR-Katalysator 16, ein dem SCR-Katalysator 16 zugeordneter Temperatursensor 17 sowie ein stromabwärts nach dem SCR-Katalysator 16 angeordneter NOx-Sensor 18 angeordnet sind.

Stromabwärts nach der Brennkraftmaschine 10 treten ein Abgasstrom ms_abg sowie ein NOx-Rohstrom ms_NOx_vK auf. Stromabwärts nach dem SCR-Katalysator 16 treten ein NOx-Strom ms_NOx_nK sowie ein Reagenzmittelschlupf ms_Rea_nK auf.

Die Luftermittlung 12 stellt einem Steuergerät 20 ein Luftsignal ms_L, die Brennkraftmaschine 10 ein Drehsignal n, der Temperatursensor 17 ein Maß für die Temperatur T_Kat des SCR-Katalysators 16 und der NOx-Sensor 18 ein Abgas-Sensorsignal S_nK zur Verfügung.

Das Steuergerät 20 stellt einer der Brennkraftmaschine 10 zugeordneten Kraftstoff-Zumessvorrichtung 25 ein Kraftstoffsignal m_K sowie der Reagenzmittel-Dosierung 14 und der Kraftstoff-Zumessvorrichtung 25 ein Reagenzmittelsignal ms_Rea zur Verfügung.

Das Steuergerät 20 enthält eine Drehmoment-Ermittlung 30, der das Luftsignal ms_L, das Drehsignal n sowie ein Drehmoment-Sollwert MFa zur Verfügung gestellt werden und die ein Drehmoment Md der Brennkraftmaschine 10 ermittelt.

Das Steuergerät 20 enthält weiterhin eine NOx-Rohstrom-Ermittlung 31, der das Luftsignal ms_L, das Drehsignal n sowie das Kraftstoffsignal m_K zur Verfügung gestellt werden und die sowohl ein berechnetes Maß ms_NOx_vK_mod des NOx-Rohstroms ms_NOx_vK als auch ein Reagenzmittel-Vorsteuersignal ms_Rea_VS ermittelt.

Das Steuergerät 20 enthält ferner eine NOx-Strom-Ermittlung 32, der das berechnete Maß ms_NOx_vK_mod für den NOx-Rohstrom ms_NOx_vK sowie ein Wirkungsgrad eta_Kat des SCR-Katalysators 16 zur Verfügung gestellt werden, und die ein berechnetes Maß ms_NOx_ nK_mod für den NOx-Strom ms_NOx_nK stromabwärts nach dem SCR-Katalysator 16 ermittelt. Der Wirkungsgrad eta_Kat des SCR-Katalysators 16 wird von einem Katalysator-Wirkungsgrad-Modell 60 bereitgestellt, dem das Maß für die Temperatur T_Kat des SCR-Katalysators 16, eine Raumgeschwindigkeit RG sowie ein Reagenzmittel-Istfüllstand Rea_Sp_Ist im SCR-Katalysator 16 zur Verfügung gestellt werden.

Das berechnete Maß ms_NOx_nK_mod für den NOx-Strom ms_NOx_nK und das Abgas-Sensorsignal S_nK werden einer ersten Differenz-Ermittlung 33 zur Verfügung gestellt, welche eine Differenz D ermittelt. Die Differenz D wird einer Dosier-Korrektureinrichtung 34 zur Verfügung gestellt, welche ein Dosier-Änderungssignal E bereitstellt, das einem ersten Summierer 35 zugeführt wird.

Der erste Summierer 35 ermittelt aus dem Dosier-Änderungssignal E und dem Reagenzmittel-Istfiillstand Rea_Sp_Ist einen modifizierten Reagenzmittel-Istfüllstand Rea_Sp_Ist', der einer zweiten Differenz-Ermittlung 36 zur Verfügung gestellt wird, welche eine Regelabweichung 37 aus dem modifizierten Reagenzmittel-Istfüllstand Rea_Sp_Ist' und einem Reagenzmittel-Sollfüllstand Rea_Sp_Soll ermittelt.

Ein Regler 38 ermittelt aus der Regelabweichung 37 eine Stellgröße 39, die einem zweiten Summierer 40 zur Verfügung gestellt wird, der zur Stellgröße 39 das Reagenzmittel-Vorsteuersignal ms_Rea_VS addiert und der das Reagenzmittelsignal ms_Rea bereitstellt. Das Reagenzmittelsignal.ms_Rea wird einem Katalysatormodell 42 zur Verfügung gestellt, das den Reagenzmittel-Istfüllstand Rea_Sp_Ist bereitstellt.

Das Reagenzmittelsignal ms_Rea wird einem ersten Integrator 50 zur Verfügung gestellt, der eine dosierte Reagenzmittelmenge M_Rea bereitstellt, die einem dritten Summierer 51 zur Verfügung gestellt wird. Der dritte Summierer 51 addiert zur dosierten Reagenzmittelmenge M_Rea eine Reagenzmittel-Füllstandsänderung D_Rea_Sp, die von einem Reagenzmittel-Füllstandsmodell 52 in Abhängigkeit vom Maß für die Temperatur T_Kat des SCR-Katalysators 16 und dem Reagenzmittel-Istfüllstand Rea_Sp_Ist ermittelt wird. Der dritte Summierer 51 gibt eine modifizierte dosierte Reagenzmittelmenge M_Rea' an eine Korrektursignal-Ermittlung 53 weiter, die ein Korrektursignal K bereitstellt, das der Dosier-Korrektureinrichtung 34 zur Verfügung gestellt wird.

Der Korrektursignal-Ermittlung 43 wird weiterhin eine konvertierte NOx-Menge D_NOx zur Verfügung gestellt, die ein zweiter Integrator 54 aus dem konvertierten NOx dms_NOx ermittelt, das eine NOx-Konvertierung-Ermittlung 55 sowohl aus dem berechnete Maß ms_NOx_vK_mod für den NOx-Rohstrom ms_NOx_vK als auch aus dem berechneten Maß ms_NOx_nK_mod für den berechneten NOx-Strom ms_NOx_nK ermittelt.

Die beiden Integratoren 50, 54 und das Reagenzmittel-Füllstandsmodell 52 werden von einem Zeitsignal beaufschlagt, das eine Zeitdauer ti und eine Wartezeit tw vorgibt. Das Zeitsignal stellt ein Zeitgeber 56 bereit.

Das erfindungsgemäße Verfahren arbeitet folgendermaßen:
Die in der Steuerung 20 angeordnete Drehmoment-Ermittlung 30 ermittelt das von der Brennkraftmaschine 10 aufzubringende Drehmoment Md in Abhängigkeit wenigstens vom vorgegebenen Drehmoment-Sollwert MFa, der beispielsweise von einem nicht näher gezeigten Fahrpedal eines Kraftfahrzeugs bereitgestellt wird, in welchem die Brennkraftmaschine 10 als Antriebsmotor angeordnet ist. Das Drehmoment Md ist wenigstens näherungsweise ein Maß für die Last der Brennkraftmaschine 10. Bei der Ermittlung des Drehmoments Md können weiterhin
das Drehsignal n und/oder das von der Lufterfassung 12 bereitgestellte Luftsignal ms_L berücksichtigt werden.

Die Steuerung 20 gibt das insbesondere anhand des Drehmoments Md festgelegte Kraftstoffsignal m_K an die Kraftstoff-Zumessvorrichtung 25 ab. Das Kraflstoffsignal m_K legt beispielsweise einen Kraftstoff-Einspritzzeitpunkt sowie eine Kraftstoff-Einspritzmenge fest. Der in der Brennkraftmaschine 10 verbrannte Kraftstoff führt zum Abgasstrom ms_abg, der in Abhängigkeit vom Betriebspunkt der Brennkraftmaschine 10 den unerwünschten mehr oder wenig hohen NOx-Rohstrom ms_NOx_vK enthalten kann. Der Begriff NOx-Rohstrom ms_NOx_vK bedeutet beispielsweise ein NOx-Massenstrom oder ein NOx-Volumenstrom oder ein NOx-Teilchenstrom oder eine NOx-Konzentration.

Zur möglichst weitgehenden Beseitigung des NOx-Rohstroms ms_NOx_vK ist wenigstens der SCR-Katalysator 16 im Abgasbereich 13 der Brennkraftmaschine 10 angeordnet. Neben dem SCR-Katalysator 16 können weitere Katalysatoren und/oder ein Partikelfilter vorgesehen sein. Der SCR-Katalysator 16 unterstützt die Reduktionsreaktion des NOx mit einem Reagenzmittel, das entweder in den Abgasbereich 13 mit der Reagenzmittel-Dosierung 14 eindosiert und/oder gegebenenfalls innermotorisch bereitgestellt wird. Anstelle des Reagenzmittels kann ein Ausgangsstoff vorgesehen sein. Im Fall des Reagenzmittels Ammoniak kann anstelle des Ammoniaks als Ausgangsstoff beispielsweise eine Harnstoff-Wasser-Lösung oder beispielsweise Ammoniumcarbamat vorgesehen sein. Die Dosierung wird mit dem Reagenzmittelsignal ms_Rea festgelegt, das der Reagenzmittel-Dosierung 14 zur Verfügung gestellt wird. Alternativ oder zusätzlich kann bei einer innermotorischen Bereitstellung des Reagenzmittels das Kraftstoffsignal m_K mit dem Reagenzmittelsignal ms_Rea derart modifiziert werden, dass das benötigte Reagenzmittel innermotorisch entsteht.

Nach dem Start des Verfahrens erfolgt die Festlegung des Reagenzmittel-Sollfüllstands Rea_Sp_Soll im SCR-Katalysator 16, der beispielsweise auf einen Wert festgelegt sein kann, der unterhalb des maximal möglichen Reagenzmittel-Füllstands im SCR-Katalysators 16 liegt, wenn ein Reagenzmittelschlupf ms_Rea_nK möglichst in allen Betriebszuständen vermieden werden soll. Eine vorteilhafte Ausgestaltung sieht dagegen vor, dass der vorgegebene Reagenzmittel-Sollfüllstand Rea_Sp_Soll mindestens dem maximal möglichen Reagenzmittel - Füllstand im SCR - Katalysator 16 entsprechen soll, der von der Temperatur T_Kat im SCR-Katalysator 16 abhängt. Der Zusammenhang ist in der eingangs genannten DE 10 2004 031 624 A1 ausführlich beschrieben, auf die hiermit vollinhaltlich Bezug genommen wird. Bei einer aufgetretenen Differenz D kann in diesem Fall davon ausgegangen werden, dass die Differenz mit hoher Wahrscheinlichkeit einen Reagenzmittelschlupf ms_Rea_nK widerspiegelt, sodass zunächst mit einer Verminderung der Dosierung reagiert werden kann..

Der Reagenzmittel-Istfüllstand Rea_Sp_Ist im SCR-Katalysator 16 kann auf den vorgegebenen Reagenzmittel-Sollfüllstand Rea_Sp_Soll gesteuert werden. Vorzugsweise ist eine Regelung auf den vorgegebenen Reagenzmittel-Sollfüllstand Rea_Sp_Soll vorgesehen. In der zweiten Differenz-Ermittlung 36 wird der Reagenzmittel-Sollfüllstand Rea_Sp_Soll mit dem modifizierten Reagenzmittel-Istfüllstand Rea_Sp_Ist' verglichen. Die zweite Differenz-Ermittlung 36 bildet eine Differenz, die als Regelabweichung 37 dem Regler 38 zugeleitet wird, der aus der Regelabweichung 37 die Stellgröße 39 ermittelt. Die Stellgröße 39 wird im zweiten Summierer 40 zu dem vorzugsweise vorhandenen Reagenzmittel-Vorsteuersignal ms_Rea_VS addiert, das die NOx-Rohstrom-Ermittlung 31 bereitstellt.

Das Reagenzmittel-Vorsteuersignal ms_Rea_VS gibt eine Grundmenge des zu dosierenden Reagenzmittels in Abhängigkeit von beispielsweise dem Drehsignal n und dem Drehmoment Md der Brennkraftmaschine 10 vor. Diese Vorgehensweise ermöglicht eine vergleichsweise einfache Applikation.

Die Stellgröße 39, die gegebenenfalls mit dem Reagenzmittel-Vorsteuersignal ms_Rea_VS verknüpft wird, legt das Reagenzmittelsignal ms_Rea fest, das der Reagenzmittel-Dosierung 15 und/oder der Kraftstoff-Zumessvorrichtung 25 zugeleitet wird. Das Reagenzmittelsignal ms_Rea gibt beispielsweise einen Öffnungsquerschnitt eines Ventils frei, der einem vorgegebenen Reagenzmittet-Durchfluss entspricht, der weiterhin vom Reagenzmitteldruck abhängt.

Das Katalysator-Modell 42 ermittelt den Reagenzmittel-Istfüllstand Rea_Sp_Ist anhand des Reagenzmittelsignals ms_Rea unter Berücksichtigung des NOx-Rohstroms ms_NOx_vK sowie weiterer Größen wie beispielsweise des NOx-Stroms ms_NOx_nK sowie des Maßes für die Temperatur T_Kat des SCR-Katalysators 16. Gegebenenfalls wird der Reagenzmittelschlupf ms_Rea_nK zusätzlich berücksichtigt. Das Katalysator-Modell 42 ist im bereits genannten Stand der Technik beschrieben, auf den an dieser Stelle nochmals Bezug genommen wird. Vorgesehen ist die Ermittlung des berechneten Maßes ms_NOx_nK_mod für den NOx-Strom ms_NOx_nK. Die Berechnung erfolgt in der NOx-Strom-Ermittlung 32 anhand des berechneten Maßes ms_NOx_vK_mod für den NOx-Rohstrom ms_NOx_vK, welche die NOx-Rohstrom-Ermittlung 31 anhand beispielsweise des Drehmoments Md und/oder des Drehsignal n bereitstellt. Die Ermittlung erfolgt anhand des Wirkungsgrads eta_Kat des SCR-Katalysators 16, den das Katalysator-Wirkungsgrad-Modell 60 anhand des Maßes für die Temperatur T_Kat berechnet, das der Temperatursensor 17 bereitstellt, der stromaufwärts vor, im oder stromabwärts nach dem SCR-Katalysator 16 angeordnet sein kann, sodass das vom Temperatursensor 17 bereitgestellte Sensorsignal wenigstens näherungsweise ein Maß für die Temperatur T_Kat des SCR-Katalysators 16 ist. Anstelle einer Temperaturmessung kann auch eine Abschätzung der Temperatur T_Kat des SCR-Katalysators 16 vorgesehen sein.

Weiterhin wird im Katalysator-Wirkungsgrad-Modell 60 vorzugsweise die Abgas-Raumgeschwindigkeit RG berücksichtigt, die aus den bekannten geometrischen Daten des SCR-Katalysators 16 und dem Abgasstrom ms_abg ermittelt werden kann. Zusätzlich wird der Reagenzmittel-Istfüllstand Rea_Sp_Ist im SCR-Katalysator 16 berücksichtigt, da der Wirkungsgrad insbesondere auch vom Reagenzmittel-Istfüllstand Rea_Sp_Ist abhängt.

Das von der NOx-Strom-Ermittlung 32 berechnete Maß ms_NOx_nK_mod für den NOx-Strom ms_NOx_nK wird in der ersten Differenz-Ermittlung 33 vom Abgas-Sensorsignal S_nK subtrahiert, um die Differenz D zu erhalten. Eine auftretende Differenz D kann bei der Dosierung berücksichtigt und das Reagenzmittelsignal ms_Rea entsprechend beeinflusst werden.

Bei der Bereitstellung des Dosier-Änderungssignals E wird in der Dosier-Korrektureinrichtung 34 neben der Differenz D weiterhin das Korrektursignal K berücksichtigt, das die Korrektursignal-Ermittlung 53 bereitstellt.

Das Dosier-Änderungssignal E könnte unmittelbar zur Beeinflussung des Reagenzmittelsignals ms_Rea herangezogen werden. Im gezeigten Ausführungsbeispiel wird das Reagenzmittelsignal ms_Rea indirekt über einen Eingriff in den Reagenzmittel-Istfüllstand Rea_Sp_Ist beeinflusst, wobei das Dosier-Änderungssignal E den Reagenzmittel-Istfüllstand Rea_Sp_Ist im SCR-Katalysator 16 manipuliert. Der vom Katalysator-Modell 42 berechnete Reagenzmittel-Istfüllstand Rea_Sp_Ist wird mit dem Dosier-Änderungssignal E beaufschlagt, sodass anschließend nur der modifizierte Reagenzmittel-Istfüllstand Rea_Sp_Ist' berücksichtigt wird. Sofern eine Differenz D auftritt, erfolgt beispielsweise eine Erhöhung des modifizierten Reagenzmittel-Istfüllstands Rea_Sp_Ist', die aufgrund des geschlossenen Regelkreises eine Verminderung des Reagenzmittelsignals ms_Rea zur Folge hat.

Prinzipiell ist es möglich, den NOx-Strom ms_NOx_nK nach dem SCR-Katalysator 16 mit einem NOx-Sensor und den Reagenzmittelschlupf ms_Rea_nK mit einem Reagenzmittel-Sensor zu erfassen. Besonders vorteilhaft ist jedoch die Ausnutzung einer vorhandenen Querempfindlichkeit des NOx-Sensors 18 gegenüber dem Reagenzmittel oder eine gezielte Herausbildung einer solchen Querempfindlichkeit. In diesem Fall spiegelt das Abgas-Sensorsignal S_nK die Summe aus Reagenzmittelschlupf ms_Rea_nK und NOx-Strom ms_NOx_nK wider. Eine auftretende Differenz D könnte daher bedeuten, dass entweder ein Reagenzmittelschlupf ms_Rea_nK oder ein hoher NOx-Strom ms_NOx_nK aufgetreten ist. Eine Unterscheidung wäre nicht möglich.

Das erfindungsgemäße Verfahren sieht deshalb eine Plausibilisierung vor, die überprüft, ob die Änderung der Dosierung mit dem Dosier-Änderungssignal E in die richtige Richtung erfolgte. Vorgesehen ist ein Vergleich der dosierten Reagenzmittelmenge M_Rea und der im SCR-Katalysator 16 umgesetzten Reagenzmittelmenge, die bis auf einen Umrechnungsfaktor mit der konvertierten NOx-Menge D_NOx identisch ist. Im Folgenden wird die konvertierte NOx-Menge D_NOx betrachtet, die der zweite Integrator 54 aus dem konvertierten NOx dms_NOx anhand einer Integration bereitstellt. Das konvertierte NOx dms_NOx wird von der NOx-Konvertierung-Ermittlung 55 anhand des berechneten Maßes ms_NOx_vK_mod für den NOx-Rohstrom ms_NOx_vK und dem berechneten Maß ms_NOx_nK_mod für den NOx-Strom ms_NOx_nK ermittelt.

Die dosierte Reagenzmittelmenge M_Rea wird vom zweiten Integrator 50 aus dem Reagenzmittelsignal ms_Rea anhand einer Integration ermittelt.

Da der Reagenzmittel-Istfüllstand Rea_Sp_Ist im SCR-Katalysator 16 von der Temperatur T_Kat des SCR-Katalysators 16 abhängt, wird gemäß einer vorteilhaften Ausgestaltung eine während der Integration gegebenenfalls aufgetretene Reagenzmittel-Füllstandsänderung D_Rea_Sp bei der dosierten Reagenzmittelmenge M_Rea berücksichtigt. Die Reagenzmittel-Füllstandsänderung D_Rea_Sp stellt das Reagenzmittel-Füllstandsmodell 52 anhand zumindest der Temperatur T_Kat des SCR-Katalysators und des vorhandenen Reagenzmittel-Istfüllstand Rea_Sp_Ist gemäß dem gemäß der im Stand der Technik angegebenen Vorgehensweise bereit, auf den an dieser Stelle nochmals ausdrücklich Bezug genommen wird.

Der dritte Summierer 51 addiert zur dosierten Reagenzmittelmenge M_Rea die Reagenzmittel-Füllstandsänderung D_Rea_Sp, die entweder positiv oder negativ sein kann und stellt die modifizierte dosierte Reagenzmittelmenge M_Rea' bereit, die in der Korrektursignal-Ermittlung 53 mit der umgesetzten Reagenzmittelmenge bzw. der konvertierten NOx-Menge D_NOx verglichen wird. In Abhängigkeit vom Vergleich wird das Korrektursignal K bereitgestellt, welches über das Dosier-Änderungssignal E das Reagenzmittelsignal ms_Rea beeinflusst.

Um von der dosierten Reagenzmittelmenge M_Rea als Absolutgröße unabhängig zu sein, kann in der Korrektursignal-Ermittlung 53 beispielsweise aus der umgesetzten Reagenzmittelmenge bzw. konvertierten NOx-Menge D_NOx, abzüglich der dosierten Reagenzmittelmenge M_Rea, weiterhin abzüglich der Reagenzmittel-Füllstandsänderung D_Rea_Sp ermittelt werden, wobei die gebildete Differenz anschließend durch die dosierte Reagenzmittelmenge M_Rea geteilt wird. Wenn das Ergebnis beispielsweise größer als ein vorgegebener Grenzwert ist, kann auf eine falsche Adaption erkannt werden, sodass das Korrektursignal K entsprechend einer Erhöhung oder Absenkung der Dosierung des Reagenzmittels ausgegeben werden kann.

Die zeitliche Steuerung erfolgt mit dem Zeitgeber 56, der die Zeitdauer ti und die Wartezeit tw sowohl an die beiden Integratoren 50, 54 als auch an das Reagenzmittel-Füllstandsmodell 52 abgibt. Die Zeitdauer ti legt beispielsweise eine Integrationszeit der Integratoren 50, 54 fest. Weiterhin legt die Zeitdauer ti die Zeit für die Ermittlung der Reagenzmittel-Füllstandsänderung D_Rea_Sp im Reagenzmittel-Füllstandsmodell 52 fest. Zusätzlich ist die Zeitdauer ti vorgesehen, um sämtliche Komponenten in periodischen Abständen auf einen Ausgangszustand zurück zu setzen. Nach einer Bereitstellung des Korrektursignals K im Zuge eines erforderlichen Eingriffs in die Dosierung mit dem Korrektursignal K kann es zweckmäßig sein, die Plausibilisierung für die ebenfalls vom Zeitgeber 56 vorgegebene Wartezeit tw, die anhand einer Applikation festgelegt werden kann, zu sperren, um einen stabilen, möglichst zumindest einen quasistationären Betriebszustand nach der Änderung der Dosierung des Reagenzmittels zu erreichen.

Die erfindungsgemäße Vorgehensweise ermöglicht durch die Plausibilisierung nach Ablauf der vom Zeitgeber 56 vorgegebenen Zeitdauer ti eine Überprüfung, ob eine Unterdosierung oder eine Überdosierung des Reagenzmittels vorgelegen hat. Sofern dies der Fall ist, wird mit dem Korrektursignal K eingegriffen und das Reagenzmittelsignal ms_Rea in die richtige Richtung beeinflusst. Die erfindungsgemäße Vorgehensweise ermöglicht somit eine optimale Konvertierung des NOx-Rohstroms ms_NOx_vK und stellt gleichzeitig einen minimalen Reagenzmittelschlupf ms_Rea_nK sicher.

## Patentansprüche

1. Verfahren zum Betreiben einer Brennkraftmaschine (10), in deren Abgasbereich (13) wenigstens ein SCR-Katalysator (16) angeordnet ist, der mit einem Reagenzmittel beaufschlagt wird, welches zur NOx-Konvertierung im SCR-Katalysator (16) beiträgt, bei dem wenigstens ein Maß (ms_NOx_nK_mod) für den stromabwärts nach dem SCR-Katalysator (16) auftretenden NOx-Strom (ms_NOx_nK) sowohl berechnet als auch mit einem NOx-Sensor (18) gemessen wird, der eine Querempfindlichkeit gegenüber dem Reagenzmittel aufweist, bei dem die Differenz (D) zwischen dem berechneten Maß (ms_NOx_nK_mod) und dem gemessenen Maß für den NOx-Strom (ms_NOx_nK) stromabwärts nach dem SCR-Katalysator (16) ermittelt wird, und bei dem ein Reagenzmittelsignal (ms_Rea), welches die Dosierung des Reagenzmittels festlegt, in Abhängigkeit von der Differenz (D) beeinflusst wird, **dadurch gekennzeichnet, dass** eine Plausibilisierung vorgesehen ist, bei welcher die in einer vorgegebenen Zeitdauer (ti) dosierte Reagenzmittelmenge (M_Rea, M_Rea') und die im SCR-Katalysator (16) umgesetzte Reagenzmittelmenge und/oder die konvertierte NOx-Menge (D_NOx) miteinander verglichen werden, und dass bei einer Abweichung ein Korrektursignal (K) bereitgestellt wird, welches das Reagenzmittelsignal (ms_Rea) beeinflusst.

2. Verfahren nach Anspruch 1, **dadurch gekennzeichnet, dass** bei der Plausibilisierung weiterhin die Änderung des Reagenzmittel-Istfüllstands (Rea_Sp_Ist) im SCR-Katalysator (16) während der vorgegebenen Zeitdauer (ti) berücksichtigt wird.

3. Verfahren nach Anspruch 2, **dadurch gekennzeichnet, dass** bei der Ermittlung der Änderung des Reagenzmittel-Istfüllstands (Rea_Sp_Ist) im SCR-Katalysator (16) die Temperatur (T_Kat) des SCR-Katalysators (16) berücksichtigt wird.

4. Verfahren nach den Ansprüchen 1 und 2, **dadurch gekennzeichnet, dass** bei der Ermittlung des Korrektursignals (K) eine Normierung auf die in der vorgegebenen Zeitdauer (ti) dosierte Reagenzmittelmenge (M_Rea, M_Rea') vorgenommen wird.

5. Verfahren nach Anspruch 1, **dadurch gekennzeichnet, dass** das Reagenzmittelsignal (ms_Rea) in Abhängigkeit vom Reagenzmittel-Istfüllstand (Rea_SP_Ist) im SCR-Katalysator (16) festgelegt wird.

6. Verfahren nach Anspruch 5, **dadurch gekennzeichnet, dass** der Reagenzmittel-Istfüllstand (Rea_SP_Ist) im SCR-Katalysator (16) auf einen vorgegebenen Reagenzmittel-Sollfüllstand (Rea_SP_Soll) geregelt wird.

7. Verfahren nach Anspruch 5, **dadurch gekennzeichnet, dass** das Reagenzmittelsignal (ms_Rea) indirekt über eine Manipulation des Reagenzmittel-Istfüllstands (Rea_SP_Ist) im SCR-Katalysator (16) beeinflusst wird.

8. Verfahren nach Anspruch 1, **dadurch gekennzeichnet, dass** nach einer Beeinflussung des Reagenzmittelsignals (ms_Rea) durch das Korrektursignal (K) eine weitere Plausibilisierung erst nach Ablauf einer vorgegebenen Wartezeit (tw) vorgenommen wird.

9. Vorrichtung zum Betreiben einer Brennkraftmaschine (10), in deren Abgasbereich (13) zumindest ein SCR-Katalysator (16) angeordnet ist, der mit einem Reagenzmittel beaufschlagt wird, welches zur NOx-Konvertierung im SCR-Katalysator (16) beiträgt, **dadurch gekennzeichnet, dass** zumindest ein zur Durchführung des Verfahrens nach einem der Ansprüche 1 bis 8 hergerichtetes Steuergerät (20) vorgesehen ist.

10. Vorrichtung nach Anspruch 9, **dadurch gekennzeichnet, dass** das Steuergerät (20) einen ersten Integrator (50) zum Ermitteln der dosierten Reagenzmittelmenge (M_Rea, M_Rea') und einen zweiten Integrator (54) zum Ermitteln der im SCR-Katalysator (16) umgesetzten Reagenzmittelmenge und/oder der konvertierten NOx-Menge (D_NOx) sowie eine Korrektursignal-Ermittlung (53) enthält, welche das Korrektursignal (K) bereitstellt.

## Claims

1. Method for operating an internal combustion engine (10) in the exhaust-gas region (13) of which is arranged at least one SCR catalytic converter (16) which is acted on with a reagent which contributes to the conversion of NOx in the SCR catalytic converter (16), in which method at least one value (ms_NOx_nK_mod) for the NOx flow (ms_MOx_nK) occurring downstream of the SCR catalytic converter (16) is both calculated and also measured by means of a NOx sensor (18) which has cross-sensitivity with respect to the reagent, in which method the difference (D) between the calculated value (ms_NOx_nK_mod) and the measured value for the NOx flow (ms_MOx_nK) downstream of the SCR catalytic converter (16) is determined, and in which method a reagent signal (ms_Rea) which defines the dosing of the reagent is influenced as a function of the difference (D), **characterized in that** a plausibility check is provided, in which plausibility check the reagent quantity (M_Rea, M_Rea') which is dosed in a predefined time period (ti) and the reagent quantity converted in the SCR catalytic converter (16) and/or the converted NOx quantity (D_NOx) are compared with one another, and **in that**, in the event of a deviation, a corrective signal (K) is provided which influences the reagent signal (ms_Rea).

2. Method according to Claim 1, **characterized in that** the change in the actual reagent filling level (Rea_Sp_Ist) in the SCR catalytic converter (16) during the predefined time duration (ti) is taken into consideration in the plausibility check.

3. Method according to Claim 2, **characterized in that** the temperature (T_Kat) of the SCR catalytic converter (16) is taken into consideration in the determination of the change in the actual reagent filling level (Rea_Sp_Ist) in the SCR catalytic converter (16).

4. Method according to Claims 1 and 2, **characterized in that** a normalization to the reagent quantity (M_Rea, M_Rea') dosed in the predefined time duration (ti) is carried out in the determination of the corrective signal (K).

5. Method according to Claim 1, **characterized in that** the reagent signal (ms_Rea) is defined as a function of the actual reagent filling level (Rea_SP_Ist) in the SCR catalytic converter (16).

6. Method according to Claim 5, **characterized in that** the actual reagent filling level (Rea_SP_Ist) in the SCR catalytic converter (16) is regulated to a predefined nominal reagent filling level (Rea_SP_Soll).

7. Method according to Claim 5, **characterized in that** the reagent signal (ms_Rea) is influenced indirectly by means of a manipulation of the actual reagent filling level (Rea_SP_Ist) in the SCR catalytic converter (16).

8. Method according to Claim 1, **characterized in that,** after the reagent signal (ms_Rea) has been influenced by means of the corrective signal (K), a further plausibility check is carried out once a predefined waiting time (tw) has expired.

9. Device for operating an internal combustion engine (10) in the exhaust-gas region (13) of which is arranged at least one SCR catalytic converter (16) which is acted on with a reagent which contributes to the conversion of NOx in the SCR catalytic converter (16), **characterized in that** at least one control unit (20) which is set up to carry out the method according to one of Claims 1 to 8 is provided.

10. Device according to Claim 9, **characterized in that** the control unit (20) contains a first integrator (50) for determining the dosed reagent quantity (M_Rea, M_Rea') and a second integrator (54) for determining the reagent quantity converted in the SCR catalytic converter (16) and/or the converted NOx quantity (D_Nox), and also a corrective signal determining unit (53) which provides the corrective signal (K).

## Revendications

1. Procédé de gestion de l'utilisation d'un moteur à combustion interne (10) qui présente dans la zone (13) des gaz d'échappement au moins un catalyseur SCR (16) alimenté en un réactif qui contribue à la conversion des NOx dans le catalyseur SCR (16),
- dans lequel au moins une mesure (ms_NOx_nK_mod) de l'écoulement de NOx (ms_NOx_nK) qui s'établit en aval du catalyseur SCR (16) est à la fois calculé et mesuré à l'aide d'un détecteur de NOx (18) qui présente une sensibilité transversale vis-à-vis du réactif,
- la différence (D) entre la mesure calculée (ms_NOx_nK_mod) et la mesure mesurée de l'écoulement de NOx (ms_NOx_nK) étant déterminée en aval du catalyseur SCR (16) et
- un signal de réactif (ms_Rea) qui définit le dosage du réactif étant influencé en fonction de la différence (D),
**caractérisé en ce que**
- une plausibilisation dans laquelle la quantité de réactif (M_Rea, M_Rea') dosée pendant une durée (ti) prédéterminée et la quantité de réactif qui a réagi dans le catalyseur SCR (16) et/ou la quantité convertie de NOx (D_NOx) sont comparées les unes aux autres est prévue et
- **en ce qu'**en cas d'écart, un signal de correction (K) qui agit sur le signal de réactif (ms_Rea) est formé.

2. Procédé selon la revendication 1, **caractérisé en ce que** lors de la plausibilisation, on tient compte en outre de la modification du niveau effectif de réactif (Rea_Sp_Ist) dans le catalyseur SCR (16) pendant la durée (ti) prédéterminée.

3. Procédé selon la revendication 2, **caractérisé en ce que** lors de la détermination de la modification du niveau effectif de réactif (Rea_Sp_Ist) dans le catalyseur SCR (16), on tient compte de la température (T_Kat) du catalyseur SCR (16).

4. Procédé selon les revendications 1 et 2, **caractérisé en ce que** lors de la détermination du signal de correction (K), on effectue une normalisation par rapport à la quantité de réactif (M_Rea, M_Rea') dosée pendant la durée (ti) prédéterminée.

5. Procédé selon la revendication 1, **caractérisé en ce que** le signal de réactif (ms_Rea) est défini en fonction du niveau effectif d'agent de réactif (Rea_SP_Ist) dans le catalyseur SCR (16).

6. Procédé selon la revendication 5, **caractérisé en ce que** le niveau effectif de réactif (Rea_SP_Ist) dans le catalyseur SCR (16) est régulé à un niveau prédéterminé de consigne de réactif (Rea_SP_Soll).

7. Procédé selon la revendication 5, **caractérisé en ce que** le signal de réactif (ms_Rea) est influencé indirectement par une manipulation du niveau effectif de réactif (Rea_SP_Ist) dans le catalyseur SCR (16).

8. Procédé selon la revendication 1, **caractérisé en ce qu'**après avoir agi sur le signal de réactif (ms_Rea) par le signal de correction (K), on ne reprend une plausibilisation qu'après qu'un temps d'attente (tw) prédéterminé s'est écoulé.

9. Dispositif de gestion du fonctionnement d'un moteur à combustion interne (10) qui présente dans la zone (13) des gaz d'échappement au moins un catalyseur SCR (16) alimenté en un réactif qui contribue à la conversion des NOx dans le catalyseur SCR (16),
**caractérisé en ce que**
- il présente au moins un appareil de commande (20) configuré pour mettre en oeuvre le procédé selon l'une des revendications 1 à 8.

10. Dispositif selon la revendication 9, **caractérisé en ce que** l'appareil de commande (20) présente un premier intégrateur (50) qui détermine la quantité dosée de réactif (M_Rea, M_Rea') et un deuxième intégrateur (54) qui détermine la quantité de réactif qui a réagi et/ou la quantité de NOx (D_NOx) qui a été convertie dans le catalyseur SCR (16), ainsi qu'une détermination (53) du signal de correction qui prépare le signal de correction (K).
